# EUROPEAN PATENT APPLICATION

(11) **EP 1 958 795 A1**
(43) Date of publication of application: **20.08.2008**
(21) Application number: 07102285.9
(22) Date of filing: 13.02.2007
(51) Int. Cl.: B60C 5/00, B60C 17/06

(54) **Tire with innertire**

(71) Applicant: Hunneman Import B.V., 8483 JK Scherpenzeel (NL)
(72) Inventor: Hunneman, Jan, 8483 JK, SCHERPENZEEL (NL)
(74) Representative: Grootscholten, Johannes A.M.

(57) **Abstract**

The invention relates to a wheel of a vehicle wheel (1), such as a cycle wheel (1), at least comprising an outer tyre (11), an inner tube (7) which defines an air chamber, and a rim (5), wherein the inner tube (7) comprises tensioning means which tension the outer tyre without pressure in the air chamber.
The invention also relates to an inner tube (7) for accommodation thereof in an assembly of a wheel (1) together with a rim (5) and an outer tyre (11), this inner tube (7) comprising an air chamber which is enclosed by a material layer of the inner tube (7), and tensioning means which tension the outer tyre (11) without pressure in the air chamber.

## Description

The present invention relates to a wheel of a vehicle wheel, such as a cycle wheel, at least comprising an outer tyre, an inner tube which defines an air chamber, and a rim.

Such wheels, and in particular inner tubes therein, are generally known. The material of the inner tube is usually thin, and protection against punctures is sought in providing measures in or on the outer tyre. An example hereof can be found in applicant's own previous Publication EP-0.901.915. This in itself already provides a considerable improvement against punctures.

The problem with the conventional configurations is that, in the unlikely case the inner tube does becomes punctured, the outer tyre usually runs off the rim. The rim and the outer tyre can then be irreparably damaged.

It is know to make use of solid rubber and/or solid foam tyres. Here however all properties of a pneumatic tyre are negated or at least worsened, such as the resilient action, shock-absorbing action and grip on the road surface of a regular pneumatic tyre (with an air chamber therein). There is very little comfort in the case of solid rubber and/or solid foam tyres. In addition, they are practically round or with a slightly oval shape in all known embodiments, without an improvement in respect of the tyre running off the rim being achieved.

The present invention has for its object to obviate or at least reduce the drawbacks of the known art. For this purpose a wheel according to the present invention is distinguished in that the inner tube comprises tensioning means which tension the outer tyre without pressure in the air chamber.

Tensioning the outer tyre using tensioning means connected to the inner tube can prevent the outer tyre running off the rim, even if the air chamber has been punctured despite measures in or on the outer tyre for preventing such punctures.

In the dependent claims are defined preferred embodiments, the features and advantages of which will be discussed hereinbelow on the basis of the figure description.

The invention will be further elucidated hereinbelow on the basis of a non-limitative exemplary embodiment thereof. In the drawing:
fig. 1 shows a cross-sectional view of a tyre round a wheel with an inner tube, all according to the present invention;
fig. 2 is a cross-sectional view of specifically the inner tube shown in figure 1, and
fig. 3 shows a cross-sectional view corresponding with fig. 2 of an alternative embodiment.

Corresponding components are designated in the figures with the same reference numerals.

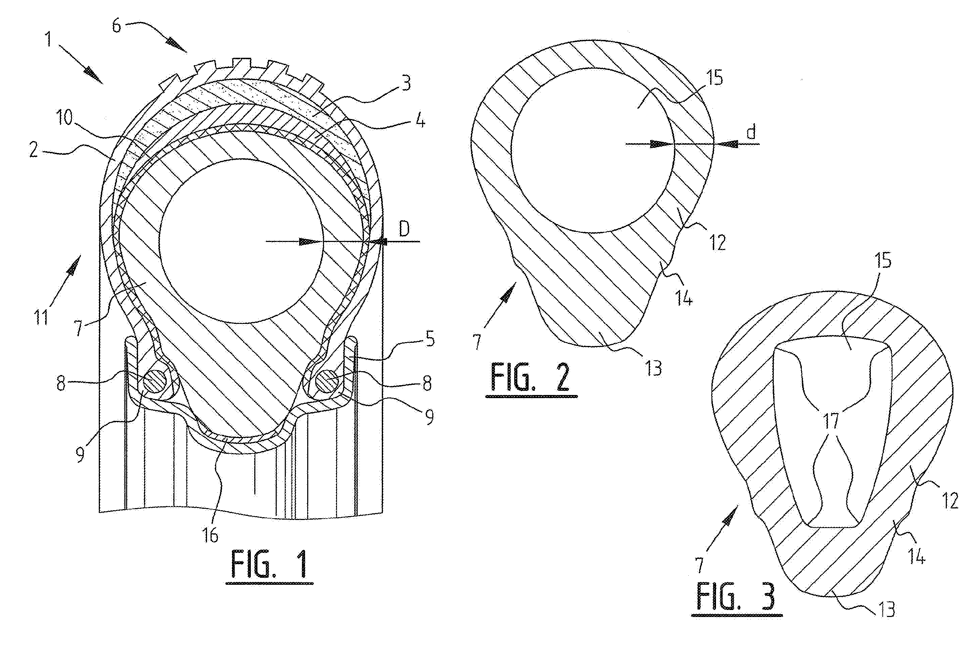

Fig. 1 shows a tyre 1 in assembled situation with and round a rim 5. Tyre 1 comprises an outer tyre 11 and an inner tube 7. Outer tyre 11 is formed from a layer of rubber 2 or another similar material such as plastic, which is provided with a tread on running surface 6. The layer of rubber 2 with running surface 6 is preferably manufactured from any type of wear-resistant rubber.

According to the present invention the outer tyre 11 further comprises a buffer layer 3 on the inner side of layer 2. Buffer layer 3 is formed here from a layer of rubber material. Buffer layer 3 can provide tyre 1 with a stiffness which, at least with air chamber 15 of inner tube 7 under pressure, ensures a rolling resistance corresponding with a high degree of travel comfort, such as of a tyre under pressure without buffer layer. Under the same conditions buffer layer 3 can further have an elasticity which optimizes shock-damping. Buffer layer 3 can be a layer as disclosed in European patent application EP-0.019.915 of the present applicant, wherein the disclosure thereof is deemed wholly included herein through reference thereto.

A breaker layer 4 can also be arranged on the inner side of the buffer layer. A breaker layer 4 is usually manufactured from hard, stiff, form-retaining and durable material, such as plastic or steel.

The dimensions can be such that a thickness of 2 mm of layer 2, 10 mm of buffer layer 3 and 1 mm of breaker layer 4 under a pressure of about 5 bar in the interior of the inner tube results in a compression of approximately 3 mm of the whole tyre under a load of about 50 kg. The separate breaker layer 4 and buffer layer 3 are not compressed, or hardly so, or a little, but the tyre can be compressed slightly as a whole.

The assembly of buffer layer 3 and breaker layer 4 is enclosed between layer 2 and a cord layer 10.

The rubber of buffer layer 3 has a hardness which is chosen for a particular application (cycle, car, etc.) so as to be equal to the hardness of a usual tyre for this application without buffer layer at a pressure prevailing in the pressure chamber which is usual for the application.

The material of buffer layer 3 can have many other properties. The material described here for use in a cycle tyre preferably has a high resistance to point load such that for instance a drawing pin, a glass splinter or the like cannot be pressed therein, or only to a very limited extent. Use of this material in a tyre results in minimizing of the penetration of objects therein. In the unlikely event an object should penetrate, it is pushed out again. This is the result of the deforming of the tyre as the contact surface approaches and leaves the road surface, as also known from the above stated EP-0.901.915. The sharp object which has penetrated slightly into the buffer layer is herein simply pushed out.

The above described material of buffer layer 3 otherwise has properties relating to elasticity which correspond with those of the material of a high-bouncing ball and is known as flexigum. The reaction of tyre 1 to unevenness in the road such as bumps is hereby wholly determined by the properties of air chamber 15 and outer tyre 11, optionally supplemented with buffer layer 3.

In embodiments of outer tyres 11 in which a breaker layer 4 is arranged further use can be made of a random, but preferably hard material, which as it were forms a further barrier to penetrating sharp objects such as glass, thorns, drawing pins, (small) nails and so on.

It will be apparent that buffer layer 3 and breaker layer 4 are positioned at and are oriented to running surface 6. The side walls of outer tyre 11 comprise no reinforcement or strengthening, or hardly any. It may be that a tyre 1 is punctured despite buffer layer 3 and/or breaker layer 4 arranged to prevent this (according to the invention these are not required parts or components). A sharp object can penetrate into the side wall of outer tyre 11 or through running surface 6. Inner tube 7 is of a per se much softer or at least more flexible material than outer tyre 11 and serves to stretch (elastically) when air under pressure is pumped into an air chamber to make tyre 1 harder. When however a conventional inner tube 7 is punctured, this hardness of tyre 1 will not only decrease; there is even a danger of the whole outer tyre 11 running off rim 5.

Outer tyre 11 comprises bead wires 8 in a bead 9, which is situated in rim 5. To a certain extent this can already prevent outer tyre 11 from running off rim 5. If however the running surface 6 is pressed against rim 5 when a conventional inner tube is punctured, there remains a great danger of outer tube 11 running off rim 5.

According to the invention measures are taken to prevent this. In particular according to the invention inner tubes 7 comprising tensioning means are manufactured and used, which tensioning means tension outer tyre 11 without appreciable pressure in the air chamber. This can thus prevent outer tyre 11 running off rim 5 all too easily. Such tensioning means comprise various embodiments in isolation or in random combination. Particularly the thickness of the layer of material of inner tube 7 and the form thereof, in particular protrusions 13 and 14, define the presence of "tensioning means" in this embodiment of the present invention, to which the invention is otherwise not limited.

By seeking the solution in measures on inner tube 7 a regular outer tyre 11 can be applied, optionally without buffer layer 3 and without breaker layer 4.

The thickness of the layer of material of inner tube 7 can thus be made considerably thicker than a conventional inner tube 7, for instance at least approximately at least a quarter of the radius of the inner tube, for instance under pressure in the air chamber of the inner tube, in particular for instance about 5 to 6 mm, as shown schematically in figures 1 and 2. If the pressure in inner tube 7 falls away, inner tube 7 continues to retain a form and thereby tensions outer tyre 11, whereby it is possible to prevent outer tyre 11 running off rim 5. The thickness can be greater or smaller than said value as long as this form-retention is then still realized without pressure in air chamber 15. The thickness of inner tube 7 can also contribute toward protection against punctures.

The thickness of the layer of material is preferably at least approximately a maximum of three quarters of the radius of the inner tube. A considerable pressure or air chamber must still be formed in inner tube 7 so as to ensure a desired hardness of tyre 1 in a normal situation of use. To the extent this can also be achieved with a greater thickness, greater thicknesses also fall within the scope of the invention.

The thickness of inner tube 7 preferably has a relation to the radius, being a distance in a situation under pressure of inner tube 7 in the pressure or air chamber 15 thereof.

With a greater than regular thickness of inner tube 7 this latter is constructed such that it can be ridden with or without air pressure in air chamber 15. Inner tube 7 is made (thickness, form and elasticity) such that it supports the outer tyre sufficiently at all times, this such that outer tyre 11 cannot displace on rim 5, even if the air pressure has fallen away; outer tyre 11 cannot therefore run off rim 5 either.

As addition or as alternative to the thickness and elasticity of the material of inner tube 7, the tensioning means can comprise at least one protrusion 13 oriented centrally toward rim 5 in use. A desired orientation of the inner tube can preferably be achieved in combination with the thickness of the material of inner tube 7 around the tyre. This orientation can also increase the distance of spoke nuts under a ribbon 16 to pressure chamber 15 and prevent punctures as a result of penetration of a conventional inner tube by the spoke nuts if ribbon 16 were to shift, which can occur.

In the shown embodiment outer tyre 11 comprises two beads 9 with bead wire 8 therein. In a favourable and shown embodiment the tensioning means comprise at least one protrusion 14 oriented obliquely outward over the bead during use. Bead 9 can thus be pressed into rim 5. Running off of inner tube 11 can hereby be impeded or even prevented. This is particularly effective with a thick wall 12 of inner tube 7 (at "D" in figures 1 and 2). The enclosing of bead 9 by the lateral protrusion on inner tube 7 is further enhanced in combination with the central protrusion 13.

The present invention thus relates to a pneumatic tyre for vehicles in general and for cycles in particular. After the earlier invention, wherein a buffer layer 3 of a very flexible material with a high resistance or strength against pressing through (point load resistance) is arranged under running surface 6 of outer tyre 11, puncturing of this type of tyre is almost precluded. Comfort and rolling resistance in particular are not affected here, or hardly so, at least not adversely.

A regular outer tyre can however be punctured in undesired manner, and a strengthened outer tyre 11 (for instance that according to the earlier application of applicant) can also still be punctured under determined (extreme) conditions - large nails can for instance penetrate with great force or a lateral penetration by a sharp object can take place. The inner tube also loses air, and therefore pressure, in the course of time as a result of some degree of porosity.

Further travel is then no longer possible, as outer tyre 11 can run off rim 5 and rim 5 can then be damaged if travel continues while rim 5 is in contact with a road surface. This is obviated according to the invention.

The form in combination with the hardness and/or stiffness and/or thickness of this inner tube 7 according to the present invention determines the correct support of outer tyre 11, both with and without air pressure in air chamber 15. In this embodiment these aspects thus determine the tensioning means as defined in the claims.

Bead 9 substantially ensures that tyre 1 always stays on the shoulder of rim 5. When the pressure on running surface 6 of outer tyre 11 increases, the pressure on bead 9 in lateral direction also increases. The part of inner tube 7 located outward relative to rim 5 and/or the part of inner tube 7 extending along the sides of outer tyre 11 herein provides for sufficient support for running surface 6 and the sides of outer tyre 11.

The central protrusion 13 of inner tube 7 holds outer tyre 11 in the correct position on rim 5. The width of this protrusion 13 must preferably correspond closely to the width of rim 5 on which tyre 1 will be or is mounted.

With the exception of protrusion 13 on inner tube 7, the dimensioning of inner tube 7 can correspond with an airbag and/or inner mould which is or are used in the production of outer tyre 11. Alternatively, reference can be made to the form of a membrane in expanded form which can be used in the production of outer tyres 11. Reference is made thereto here as a common and known technique with which the skilled person is familiar.

The form of inner tube 7 determines the correct fitting between rim 5, inner tube 7 and outer tyre 11, particularly when no pressure prevails in air chamber 15, and hereby also determines a good support or tensioning of outer tyre 11.

In respect of the comfort of a wheel according to the invention it can be noted that it decreases slightly when air chamber 15 is empty or is at least not tensioned. The resilient and shock-damping properties of a normal inner tube are on the other hand preserved to some extent.

If an air chamber 15 is completely empty, the hollow space of inner tube 7, air chamber 15, even without pressure therein, ensures that the resilient and shock-damping action are not wholly lost.

In respect of the material of the inner tube it can be noted that it does not have to differ from the materials and/or compounds from which conventional, normal inner tubes are made. The form and thickness then determine the question of whether an embodiment is one which falls within the present invention as defined in the appended claims. It can be noted here that with a thicker inner tube 7 there is a much smaller chance of pressure loss in air chamber 15 as a result of porosity of the material of the inner tube. For the production of inner tubes 7 according to the present invention use can however also be made of a different type of rubber and/or plastic which corresponds with and/or complies with the requirements and qualification of normal rubber as can be used in the production of conventional, normal inner tubes 7.

Sufficient attention must be paid here to aspects of such materials to be used, such as elongation at break; hardness and/or stiffness of the rubber. Variations in these properties can even be considered in the direction of the periphery of the inner tube. At the position of the rim the inner tube can for instance be stiffer or more rigid than a material which can be used for conventional inner tubes, preferably so as to bring about still further improved clamping or engagement of the bead of outer tyre 11. Diverse variations are possible, such as soft compounds, medium-hard compounds or hard compounds. The choice of the material is related to the hardness and/or stiffness it is wished to impart to the inner tube rubber as a whole or locally. The material choice can also determine the weight of the inner tube.

Sufficient support of outer tyre 11 by the inner tube, even without pressure in air chamber 15, is brought about by appropriate choices of, among other factors, the thickness of the material and the properties per se of the chosen material from which to manufacture an inner tube.

When the material is harder and/or stiffer, it is possible to suffice with a smaller thickness of the inner tube. When a softer and perhaps more elastic material is chosen, a greater thickness is necessary to obtain sufficient supporting capacity.

The form of inner tube 7 is important for holding outer tyre 11 in the correct position on rim 5 at all times. This is the case with or without pressure in air chamber 15 of the inner tube and with a sufficient hardness and/or stiffness of inner tube 7.

The supporting capacity of the inner tube results from the form and/or hardness and/or stiffness and/or elasticity of the inner tube. This latter has a substantial degree of form-retention, even without pressure in the air chamber. The hardness and/or stiffness is obtained by material choice and/or the wall thickness of the material relative to the air chamber, and so on.

Figure 3 shows another embodiment of an inner tube 7 according to the present invention, with the design of air chamber 15 therein differing from the embodiment in figures 1 and 2. In the embodiment of figure 3 this has a more rectangular form with rounded corners 17 therein.

There is a wide choice of rubber types and/or plastics for the materials to be used. As in normal inner tubes however, material aspects such as elongation at break and hardness and/or stiffness must also be sufficient to prevent punctures and simultaneously be able to produce a sufficiently hard tyre with air chamber 15 under pressure, which makes it possible that the outer tyre does not come off the rim even when there is no pressure in air chamber 15.

When the air chamber is not (any longer) under pressure, comfort is reduced relative to a normal inner tube under pressure. The resilient and shock-damping properties are however not then wholly lost.

Reinforcement, for instance in the form of elements comparable to bead wires in the outer tyre or an extra elastic material for forming the protrusions, can further be arranged in the material of the inner tube along protrusions 13, 14. This can contribute toward the effect that bead wire 9 of the outer tyre is properly engaged and is pressed in or against rim 5.

It is thus found that various additional and alternative embodiments can be envisaged which will all occur to the skilled person after examination of the foregoing without departing from the scope of the present invention, i.e. the letter or spirit of the appended claims.

## Claims

1. Wheel of a vehicle wheel, such as a cycle wheel, at least comprising an outer tyre, an inner tube which defines an air chamber, and a rim, wherein the inner tube comprises tensioning means which tension the outer tyre without pressure in the air chamber.

2. Wheel as claimed in claim 1, wherein the tensioning means are embodied in at least one of the properties from the group comprising: the form of the inner tube; the stiffness and/or hardness and/or elasticity of a material applied for the inner tube at a thickness thereof.

3. Wheel as claimed in claim 1 or 2, wherein the inner tube is manufactured from a thick layer of material.

4. Wheel as claimed in claim 3, wherein the thickness of the layer of material amounts at least approximately to at least a quarter of the radius of the inner tube.

5. Wheel as claimed in claim 3 or 4, wherein the thickness of the layer of material amounts at least approximately to a maximum of three-quarters of the radius of the inner tube.

6. Wheel as claimed in claim 4 or 5, wherein the radius is a distance in a situation where the inner tube is under pressure.

7. Wheel as claimed in claim 4, 5 or 6, wherein the layer of material of the inner tube has a thickness in the order of magnitude of 5 to 6 mm.

8. Wheel as claimed in at least one of the foregoing claims, wherein the tensioning means comprise at least one protrusion oriented centrally to the rim during use.

9. Wheel as claimed in at least one of the foregoing claims, wherein the outer tyre comprises at least one bead, and the tensioning means comprise at least one protrusion oriented obliquely outward over the bead during use.

10. Inner tube for accommodation thereof in an assembly of a wheel together with a rim and an outer tyre, this inner tube comprising an air chamber which is enclosed by a material layer of the inner tube, and tensioning means which tension the outer tyre without pressure in the air chamber.
